(19) Europäisches Patentamt
European Patent Office
Office européen des brevets

(11) EP 4 667 971 A1

(12) EUROPEAN PATENT APPLICATION
published in accordance with Art. 153(4) EPC

(43) Date of publication:
24.12.2025 Bulletin 2025/52

(21) Application number: 24759453.4

(22) Date of filing: 17.01.2024

(51) International Patent Classification (IPC):
G01S 13/95 (2006.01)

(52) Cooperative Patent Classification (CPC):
G01S 13/931; G01S 13/95; Y02A 90/10

(86) International application number:
PCT/CN2024/072710

(87) International publication number:
WO 2024/174774 (29.08.2024 Gazette 2024/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.02.2023 CN 202310165333

(71) Applicant: Shenzhen Yinwang Intelligent
Technologies Co., Ltd.
Shenzhen, Guangdong 518110 (CN)

(72) Inventor: WANG, Ben
Shenzhen, Guangdong 518129 (CN)

(74) Representative: Körber, Martin Hans
Mitscherlich PartmbB
Patent- und Rechtsanwälte
Karlstraße 7
80333 München (DE)

(54) **METEOROLOGICAL INFORMATION PROCESSING METHOD AND PROCESSING APPARATUS**

(57) A meteorological information processing method and processing apparatus are provided and are applied to the field of radar technologies. First RV data collected by a millimeter-wave radar on a vehicle is obtained (S201); a first meteorological parameter is determined based on the first RV data, where the first meteorological parameter includes a radial velocity of a raindrop in an environment in which the vehicle is located when the millimeter-wave radar collects the first RV data (S202); a first traveling parameter is obtained, where the first traveling parameter includes a vehicle speed and/or a yaw rate of the vehicle present when the millimeter-wave radar collects the first RV data (S203); and a first wind direction and/or a first wind speed in the environment are/is determined based on the first traveling parameter and the first meteorological parameter (S204). In the method, meteorological information in an environment in which an intelligent driving vehicle is located may be processed, to facilitate safe driving of the intelligent driving vehicle based on the meteorological information.

Obtain first range Doppler data collected by a millimeter-wave radar on a vehicle — S201

Determine a first meteorological parameter based on the first range Doppler data, where the first meteorological parameter includes a radial velocity of a raindrop in an environment in which the vehicle is located when the millimeter-wave radar collects the first range Doppler data — S202

Obtain a first traveling parameter, where the first traveling parameter includes a vehicle speed and/or a yaw rate of the vehicle present when the millimeter-wave radar collects the first range Doppler data — S203

Determine a second meteorological parameter based on the first traveling parameter and the first meteorological parameter, where the second meteorological parameter includes a first wind direction and/or a first wind speed in the environment in which the vehicle is located — S204

FIG. 2

**Description**

This application claims priority to Chinese Patent Application No. 202310165333.9, filed with the China National Intellectual Property Administration on February 20, 2023 and entitled "METEOROLOGICAL INFORMATION PROCESSING METHOD AND PROCESSING APPARATUS", which is incorporated herein by reference in its entirety.

**TECHNICAL FIELD**

This application relates to the field of radar technologies, and in particular, to a meteorological information processing method and processing apparatus.

**BACKGROUND**

With emergence of intelligent vehicles and automatic driving technologies, intelligent driving vehicles provide new possibilities in meeting requirements of convenient, safe, and fast travel of users, using social resources more effectively, and other aspects. The intelligent driving vehicle mainly uses a sensing device, for example, a radar mounted on the vehicle to detect environment information around the vehicle, and plans and controls a traveling status of the vehicle based on sensing information detected by the vehicle-mounted radar, to ensure safe traveling of the vehicle.

However, performance of the vehicle-mounted radar is greatly affected by weather factors. For example, when a target detected by the vehicle-mounted radar is in a rain region, a raindrop particle weakens radar signal propagation, and consequently detection performance of the vehicle-mounted radar for a small target deteriorates. In addition, the vehicle-mounted radar is affected by a backscattering echo formed by a raindrop particle near the target, and consequently the vehicle-mounted radar detects a rain clutter, causing a false alarm of the radar and affecting reliability of an intelligent driving function (for example, an automatic driving function) and traffic safety.

Therefore, meteorological information in an environment in which the intelligent driving vehicle is located needs to be detected, to facilitate safe driving of the intelligent driving vehicle based on the meteorological information.

**SUMMARY**

This application provides a meteorological information processing method and processing apparatus, so that meteorological information in an environment in which an intelligent driving vehicle is located can be processed, to facilitate safe driving of the intelligent driving vehicle based on the meteorological information.

According to a first aspect, this application provides a meteorological information processing method, including: obtaining first range Doppler RV data collected by a millimeter-wave radar on a vehicle; obtaining a first traveling parameter, where the first traveling parameter includes a vehicle speed and/or a yaw rate of the vehicle present when the millimeter-wave radar collects the first RV data; determining a first meteorological parameter based on the first RV data, where the first meteorological parameter includes a radial velocity of a raindrop in an environment in which the vehicle is located when the millimeter-wave radar collects the first RV data; and determining a second meteorological parameter based on the first traveling parameter and the first meteorological parameter, where the second meteorological parameter includes a first wind direction and/or a first wind speed in the environment.

Optionally, the method may be performed by a chip or a processor in the millimeter-wave radar, or may be performed by a processing apparatus that is not included in the millimeter-wave radar in the vehicle, for example, may be performed by another controller in the vehicle, or may be performed by a server end of the vehicle.

The first range Doppler (range velocity, RV) data is single-frame data collected by the millimeter-wave radar when the vehicle travels in a rainy environment.

Optionally, the first traveling parameter may be obtained from a multi-domain controller of an intelligent driving vehicle.

In this technical solution, a relationship between the RV data collected by the millimeter-wave radar and the radial velocity of the raindrop is fully used to obtain the radial velocity of the raindrop based on the RV data collected by the millimeter-wave radar, and the wind direction and/or the wind speed in the traveling environment of the vehicle are/is determined based on the radial velocity of the raindrop, thereby helping manage or control the vehicle based on the wind direction and/or the wind speed, and improving traveling safety of the vehicle in more traveling scenarios.

In addition, in the technical solution of this application, the wind direction and/or the wind speed in the traveling environment are further determined through full consideration of the traveling speed and/or the yaw rate of the vehicle, so that accuracy of the obtained wind direction and/or the obtained wind speed can be improved, thereby helping improve traveling safety of the vehicle.

In this technical solution, a millimeter-wave radar originally deployed in the intelligent driving vehicle is reused to determine meteorological information. This has advantages of being convenient and fast without incurring additional costs. Processing of the first wind direction and/or the first wind speed can be implemented without use of another sensor and device. This is highly operable and low-cost.

With reference to the first aspect, in a possible implementation, the first meteorological parameter includes a first radial velocity and a second radial velocity of the raindrop in the environment; and determining the first wind direction based on the first traveling parameter and the first meteorological parameter includes: substituting the first traveling parameter and a first horizontal azimuth of the millimeter-wave radar into a first relational expression, to obtain a second relational expression, where the first relational expression is a relational expression for determining a radial velocity of the raindrop based on a traveling parameter of the vehicle, a horizontal azimuth of the millimeter-wave radar, the radial velocity of the raindrop, and a wind direction; substituting the first traveling parameter and a second horizontal azimuth of the millimeter-wave radar into the first relational expression, to obtain a third relational expression; and determining the first wind direction according to the second relational expression, the third relational expression, the first radial velocity, and the second radial velocity, where the first wind direction makes a ratio of the second relational expression to the third relational expression be equal to a ratio of the first radial velocity to the second radial velocity, and a value relationship between a cosine value of a difference obtained by subtracting a mounting angle of the millimeter-wave radar and the first horizontal azimuth from the first wind direction and a cosine value of a difference obtained by subtracting the mounting angle of the millimeter-wave radar and the second horizontal azimuth from the first wind direction is the same as a value relationship between the first radial velocity and the second radial velocity.

The first relational expression is a speed relationship model based on a traveling parameter of the vehicle, a parameter of the millimeter-wave radar, meteorological information, and a radial velocity of the raindrop.

In this implementation, a fourth relational expression between the second relational expression, the third relational expression, the first radial velocity, and the second radial velocity may be established, and different wind directions are traversed in the fourth relational expression, so that the first wind direction may be determined. The first wind direction is a wind direction that makes the fourth relational expression hold. The fourth relational expression is as follows:

$$\frac{\text{First radial velocity}}{\text{Second radial velocity}} = \frac{\text{Second relational expression}}{\text{Third relational expression}}$$

When different wind directions are traversed in the fourth relational expression, determining of the first azimuth and the second azimuth needs to meet a condition: In this case, a value relationship between a cosine value of a difference obtained by subtracting the mounting angle of the millimeter-wave radar and the first horizontal azimuth from a traversed wind direction and a cosine value of a difference obtained by subtracting the mounting angle of the millimeter-wave radar and the second horizontal azimuth from the wind direction is the same as a value relationship between the first radial velocity and the second radial velocity.

Optionally, a value range of the wind direction may be 0° to 360°.

Optionally, when the wind direction is traversed in the fourth relational expression, a variation of the wind direction may be preset. For example, the variation may be 1° or 10°.

For example, the wind direction may be traversed in a form of 0°, 1°, ..., and 360°, or the wind direction may be traversed in a form of 0°, 10°, ..., and 360°.

With reference to the first aspect, in a possible implementation, one of the first radial velocity and the second radial velocity is a maximum radial velocity in the first RV data, and the other is a minimum radial velocity in the first RV data; and one of the first horizontal azimuth and the second horizontal azimuth is a maximum horizontal azimuth of a field of view range of the millimeter-wave radar, and the other is a minimum horizontal azimuth of the field of view range of the millimeter-wave radar.

In this implementation, for example, the first radial velocity is a maximum radial velocity in a rain clutter region of the first RV data, and the second radial velocity is a minimum radial velocity in the rain clutter region of the first RV data. For another example, the first radial velocity is a minimum radial velocity in a rain clutter region of the first RV data, and the second radial velocity is a maximum radial velocity in the rain clutter region of the first RV data.

Similarly, for example, the first horizontal azimuth is the maximum horizontal azimuth of the field of view (field of view, FOV) range of the millimeter-wave radar, and the second horizontal azimuth is the minimum horizontal azimuth of the FOV range of the millimeter-wave radar. For another example, the first horizontal azimuth is the minimum horizontal azimuth of the millimeter-wave radar, and the second horizontal azimuth is the maximum horizontal azimuth of the millimeter-wave radar.

With reference to the first aspect, in a possible implementation, the first relational expression includes the following relational expression:

$$V_{wind}*\cos(\emptyset - \alpha_{ins} - \theta)\cos(\beta) - V_{car}\cos(\alpha_{yaw} - \alpha_{ins} - \theta)\cos(\beta) - (w+V_{wind\_z})\sin(\beta),$$

where

$V_{wind}$ is a velocity of the raindrop in a horizontal wind direction, $Y_{car}$ is a vehicle speed of the vehicle, w is a vertical falling end velocity of the raindrop, $V_{wind\_z}$ is a moving velocity of the raindrop under an action of a vertical fluctuating wind, ø is a wind direction, $\alpha_{ins}$ is the mounting angle of the millimeter-wave radar, $\theta$ is a horizontal azimuth of the millimeter-wave radar for detecting a target, $\beta$ is a pitch angle of the millimeter-wave radar for detecting the target, and $\alpha_{yaw}$ is a yaw rate of the vehicle.

In this implementation, for example, the second relational expression obtained by substituting the first traveling parameter and the first horizontal azimuth of the millimeter-wave radar into the first relational expression may be:

$$V_{wind}*\cos(\emptyset - \alpha_{ins} - \theta_1)\cos(\beta) - V_{car1}\cos(\alpha_{yaw1} - \alpha_{ins} - \theta_1)\cos(\beta) - (w + V_{wind\_z})\sin(\beta),$$

and

the third relational expression obtained by substituting the first traveling parameter and the second horizontal azimuth of the millimeter-wave radar into the first relational expression may be:

$$V_{wind}*\cos(\emptyset - \alpha_{ins} - \theta_2)\cos(\beta) - V_{car1}\cos(\alpha_{yaw1} - \alpha_{ins} - \theta_2)\cos(\beta) - (w + V_{wind\_z})\sin(\beta)$$

Herein, $V_{car1}$ is the vehicle speed of the vehicle present when the millimeter-wave radar collects the first RV data, $\alpha_{yaw1}$ is the yaw rate of the vehicle, $\theta_1$ is the first horizontal azimuth, and $\theta_2$ is the second horizontal azimuth.

In this implementation, in the first relational expression, impact of the parameter of the millimeter-wave radar and the parameter of the vehicle on the radial velocity of the raindrop is considered, so that accuracy of a result is improved, and the technical solution is further applicable to a moving scenario, thereby improving flexibility of a use scenario.

With reference to the first aspect, in a possible implementation, determining the first wind speed based on the first traveling parameter and the first meteorological parameter includes: determining a first velocity of the raindrop in the horizontal wind direction in the environment based on the first meteorological parameter, the first relational expression, the first wind direction, and the first traveling parameter, where the first velocity makes a radial velocity obtained by substituting the first wind direction and the first traveling parameter into the first relational expression be equal to the first meteorological parameter; and determining the first wind speed based on the first velocity and a relational expression between a speed of the raindrop in the horizontal wind direction and a wind speed.

In this implementation, when the first velocity of the raindrop in the horizontal wind direction in the environment is determined, the horizontal azimuth of the millimeter-wave radar for detecting the target in the first relational expression should correspond to the first meteorological parameter.

For example, the first horizontal azimuth corresponds to the first radial velocity, and the second horizontal azimuth corresponds to the second radial velocity.

For example, if the horizontal azimuth of the millimeter-wave radar is the first horizontal azimuth, when the first velocity is determined through substitution of the first wind direction and the first traveling parameter into the first relational expression, the first velocity makes a radial velocity obtained by substituting the first wind direction and the first traveling parameter into the first relational expression be equal to the first radial velocity.

For another example, if the horizontal azimuth of the millimeter-wave radar is the second horizontal azimuth, when the first velocity is determined through substitution of the first wind direction and the first traveling parameter into the first relational expression, the first velocity makes a radial velocity obtained by substituting the first wind direction and the first traveling parameter into the first relational expression be equal to the second radial velocity.

Optionally, when the first velocity of the raindrop in the horizontal wind direction in the environment is determined, the first velocity may further make the radial velocity obtained by substituting the first wind direction and the first traveling parameter into the first relational expression be proportional to the first meteorological parameter. The method for determining the first velocity provided in this implementation is merely an example.

In the meteorological field, there is a relational expression based on a drag coefficient between a velocity of a raindrop in the horizontal wind direction and an actual wind speed. Therefore, the first wind speed may be determined based on the first velocity and a relational expression between the velocity of the raindrop in the horizontal wind direction and the wind speed.

With reference to the first aspect, in a possible implementation, before the determining a first meteorological parameter based on the first RV data, the method further includes: determining that the environment is a rainy environment.

In this implementation, the first meteorological parameter in the first RV data is determined only when it is determined that the environment in which the vehicle is located is the rainy environment, to determine the wind direction and the wind speed of the environment, thereby saving resources.

With reference to the first aspect, in a possible implementation, the method further includes: obtaining second RV data collected by the millimeter-wave radar; obtaining a second traveling parameter, where the second traveling parameter includes a vehicle speed and/or a yaw rate of the vehicle present when the millimeter-wave radar collects the second RV data; determining a third meteorological parameter based on the second RV data, where the third meteorological parameter includes a radial velocity of a raindrop in an environment in which the vehicle is located when the millimeter-wave radar collects the second RV data; determining a fourth meteorological parameter based on the second traveling parameter and the third meteorological parameter, where the fourth meteorological parameter includes a second wind direction and/or a second wind speed in the environment; and determining a fifth meteorological parameter based on an average value of the second meteorological parameter and the fourth meteorological parameter, where the fifth meteorological parameter includes a third wind direction and/or a third wind speed in the environment in which the vehicle is located.

In this implementation, an average value of the first wind direction calculated based on the first RV data and the second wind direction calculated based on the second RV data may be used as a final detection result of the first RV data/the second RV data, and an average value of the first wind speed calculated based on the first RV data and the second wind speed calculated based on the second RV data is used as a final detection result of the first RV data/the second RV data, thereby improving accuracy and robustness of a wind direction/wind speed detection result.

With reference to the first aspect, in a possible implementation, the method further includes: obtaining first rain clutter energy information in the first RV data; and determining a first rainfall amount in the environment based on the first rain clutter energy information and a mapping relationship between rain clutter energy information and a rainfall amount.

Optionally, the mapping relationship between the rain clutter energy information and the rainfall amount may be configured in the millimeter-wave radar in advance, to help the millimeter-wave radar invoke the mapping relationship, thereby improving efficiency.

In this implementation, strength of rain clutter energy detected by the millimeter-wave radar may reflect a value of a rainfall amount. Therefore, rain clutter energy in the RV data detected by the millimeter-wave radar may be analyzed, so that rainfall amount information in the environment in which the vehicle is located may be accurately determined.

With reference to the first aspect, in a possible implementation, the method further includes: obtaining second rain clutter energy information in the second RV data collected by the millimeter-wave radar; and determining, based on the mapping relationship between the rain clutter energy information and the rainfall amount, a second rainfall amount corresponding to the second rain clutter energy information; and the determining a first rainfall amount in the environment based on the first rain clutter energy information and a mapping relationship between rain clutter energy information and a rainfall amount includes: determining, based on the mapping relationship between the rain clutter energy information and the rainfall amount, a third rainfall amount corresponding to the first rain clutter energy information; and determining the first rainfall amount based on an average value of the third rainfall amount and the second rainfall amount.

In this implementation, the average value of the third rainfall amount calculated based on the first RV data and the second rainfall amount calculated based on the second RV data may be used as a final rainfall amount detection result of the first RV data, so that accuracy and robustness of the rainfall amount detection result can be improved.

With reference to the first aspect, in a possible implementation, the method further includes: outputting prompt information based on the first rainfall amount, where the prompt information indicates a rainfall amount condition in the environment.

Optionally, the prompt information may further include meteorological information such as the wind direction and the wind speed in the environment in which the vehicle is located.

In this implementation, the prompt information may be output to the multi-domain controller (multi-domain controller, MDC) based on the detected meteorological information.

With reference to the first aspect, in a possible implementation, when the first rainfall amount is less than or equal to a first threshold, the rainfall amount condition includes no rain; when the first rainfall amount is greater than or equal to a second threshold, the rainfall amount condition includes heavy rain; or when the first rainfall amount is greater than a first threshold and less than a second threshold, the rainfall amount condition includes light rain.

In this implementation, the rainfall amount condition is determined based on the first rainfall amount, so that the multi-domain controller can adjust a level of an automatic driving function based on the rainfall amount condition, or prompt a driver or a passenger by using some interaction interfaces of the vehicle, to improve traveling safety of the vehicle.

For example, if the rainfall amount condition is heavy rain, the multi-domain controller may disable the automatic driving function or reduce the level of the automatic driving function.

According to a second aspect, this application provides a meteorological information processing apparatus. The apparatus includes modules configured to implement the method in any one of the first aspect or the implementations of the first aspect, and each module may be implemented in a form of hardware and/or software.

For example, the apparatus may include a transceiver module and a processing module. The transceiver module is configured to obtain first RV data collected by a millimeter-wave radar on a vehicle. The transceiver module is further configured to obtain a first traveling parameter, where the first traveling parameter includes a vehicle speed and/or a yaw rate of the vehicle present when the millimeter-wave radar collects the first RV data. The processing module is configured to determine a first meteorological parameter based on the first RV data, where the first meteorological parameter includes a radial velocity of a raindrop in an environment in which the vehicle is located when the millimeter-wave radar collects the first RV data. The processing module is further configured to determine a second meteorological parameter based on the first traveling parameter and the first meteorological parameter, where the second meteorological parameter includes a first wind direction and/or a first wind speed in the environment.

With reference to the second aspect, in a possible implementation, the first meteorological parameter includes a first radial velocity and a second radial velocity of the raindrop in the environment. The processing module is further configured to: substitute the first traveling parameter and a first horizontal azimuth of the millimeter-wave radar into a first relational expression, to obtain a second relational expression, where the first relational expression is a relational expression for determining a radial velocity of the raindrop based on a traveling parameter of the vehicle, a horizontal azimuth of the millimeter-wave radar, the radial velocity of the raindrop, and a wind direction. The processing module is further configured to: substitute the first traveling parameter and a second horizontal azimuth of the millimeter-wave radar into the first relational expression, to obtain a third relational expression. The processing module is further configured to determine the first wind direction according to the second relational expression, the third relational expression, the first radial velocity, and the second radial velocity, where the first wind direction makes a ratio of the second relational expression to the third relational expression be equal to a ratio of the first radial velocity to the second radial velocity, and a value relationship between a cosine value of a difference obtained by subtracting a mounting angle of the millimeter-wave radar and the first horizontal azimuth from the first wind direction and a cosine value of a difference obtained by subtracting the mounting angle of the millimeter-wave radar and the second horizontal azimuth from the first wind direction is the same as a value relationship between the first radial velocity and the second radial velocity.

With reference to the second aspect, in a possible implementation, the processing module is further configured to determine a first velocity of the raindrop in the horizontal wind direction in the environment based on the first meteorological parameter, the first relational expression, the first wind direction, and the first traveling parameter, where the first velocity makes a radial velocity obtained by substituting the first wind direction and the first traveling parameter into the first relational expression be equal to the first meteorological parameter. The processing module is further configured to determine the first wind speed based on the first velocity and a relational expression between a speed of the raindrop in the horizontal wind direction and a wind speed.

With reference to the second aspect, in a possible implementation, the processing module is further configured to determine that the environment is a rainy environment.

With reference to the second aspect, in a possible implementation, the transceiver module is further configured to obtain second RV data collected by the millimeter-wave radar. The transceiver module is further configured to obtain a second traveling parameter, where the second traveling parameter includes a vehicle speed and/or a yaw rate of the vehicle present when the millimeter-wave radar collects the second RV data. The processing module is further configured to determine a third meteorological parameter based on the second RV data, where the third meteorological parameter includes a radial velocity of a raindrop in an environment in which the vehicle is located when the millimeter-wave radar collects the second RV data. The processing module is further configured to determine a fourth meteorological parameter based on the second traveling parameter and the third meteorological parameter, where the fourth meteorological parameter includes a second wind direction and/or a second wind speed in the environment. The processing module is further configured to determine a fifth meteorological parameter based on an average value of the second meteorological parameter and the fourth meteorological parameter, where the fifth meteorological parameter includes a third wind direction and/or a third wind speed in the environment in which the vehicle is located.

With reference to the second aspect, in a possible implementation, the transceiver module is further configured to obtain first rain clutter energy information in the first RV data. The processing module is further configured to determine a first rainfall amount in the environment based on the first rain clutter energy information and a mapping relationship between rain clutter energy information and a rainfall amount.

With reference to the second aspect, in a possible implementation, the transceiver module is further configured to obtain second rain clutter energy information in the second RV data collected by the millimeter-wave radar. The processing module is further configured to determine, based on the mapping relationship between the rain clutter energy information and the rainfall amount, a second rainfall amount corresponding to the second rain clutter energy information. The processing module is further configured to determine, based on the mapping relationship between the rain clutter energy information and the rainfall amount, a third rainfall amount corresponding to the first rain clutter energy information. The processing module is further configured to determine the first rainfall amount based on an average value of the third rainfall amount and the second rainfall amount.

With reference to the second aspect, in a possible implementation, the processing module is further configured to output prompt information based on the first rainfall amount, where the prompt information indicates a rainfall amount condition in the environment.

With reference to the second aspect, in a possible implementation, the processing module is further configured to determine the rainfall amount condition based on the first rainfall amount.

According to a third aspect, this application provides a meteorological information processing apparatus, including at least one processor and a communication interface. The communication interface and the at least one processor are interconnected through a line, and the at least one processor is configured to run a computer program or instructions, to perform the method according to any one of the first aspect or the possible implementations of the first aspect.

According to a fourth aspect, this application provides a millimeter-wave radar. The millimeter-wave radar includes the processing apparatus according to the third aspect.

According to a fifth aspect, this application provides a vehicle. The vehicle includes the processing apparatus according to the second aspect or the third aspect, or includes the millimeter-wave radar according to the fourth aspect.

According to a sixth aspect, this application provides a computer-readable medium. The computer-readable medium stores program code to be executed by a device, and the program code include performing the method according to any one of the first aspect or the possible implementations of the first aspect.

According to a seventh aspect, this application provides a computer program product including instructions. When the computer program product is run on a computer, the computer is enabled to perform the method according to any one of the first aspect or the possible implementations of the first aspect.

## BRIEF DESCRIPTION OF DRAWINGS

FIG. 1 is a diagram of an architecture of an intelligent driving vehicle according to an embodiment of this application;
FIG. 2 is a schematic flowchart of a meteorological information processing method according to an embodiment of this application;
FIG. 3 is a diagram of single-frame RV data according to an embodiment of this application;
FIG. 4 is a diagram of RV data under different rainfall amount conditions according to an embodiment of this application;
FIG. 5 is a schematic flowchart of a method for determining a rainfall amount based on rain clutter energy information according to an embodiment of this application;
FIG. 6A and FIG. 6B are a schematic flowchart of a meteorological information processing method according to another embodiment of this application;
FIG. 7 is a diagram of a rainfall amount detection result according to an embodiment of this application;
FIG. 8 is a schematic flowchart of a meteorological information alarm method according to an embodiment of this application;
FIG. 9 is a diagram of a structure of a meteorological information processing apparatus according to an embodiment of this application; and
FIG. 10 is a diagram of a structure of a meteorological information processing apparatus according to another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to specific embodiments.

## DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings indicate a same or similar element. Implementations described in the following example embodiments do not represent all implementations consistent with this application. On the contrary, the implementations are merely examples of apparatuses and methods that are described in the appended claims in detail and that are consistent with some aspects of this application.

By using specific embodiments, the following describes in detail the technical solutions of this application and how to resolve the foregoing technical problem by using the technical solutions of this application. The following describes embodiments of this application with reference to the accompanying drawings. The following steps may be implemented in a software manner, or in a manner of combining hardware and software.

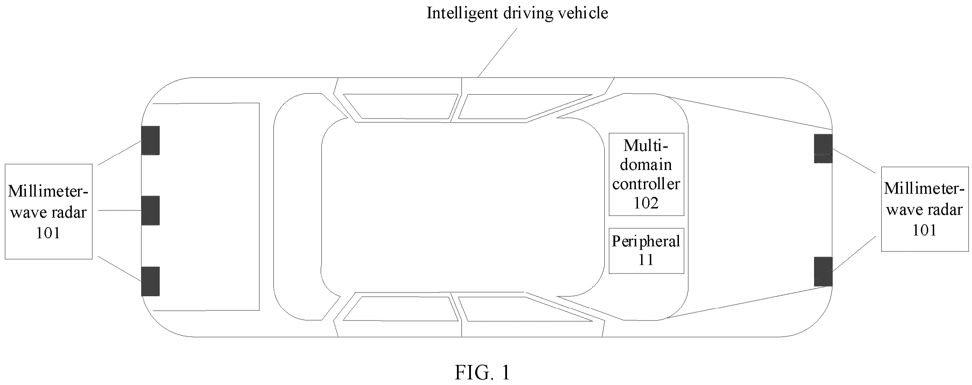

For example, FIG. 1 is a diagram of an architecture of an intelligent driving vehicle according to an embodiment of this application. As shown in FIG. 1, the intelligent driving vehicle includes a peripheral 11, a millimeter-wave radar 101, and a multi-domain controller (multi-domain controller, MDC) 102.

The millimeter-wave radar 101 is a radar that operates in a millimeter-wave (millimeter-wave) band for detection, a frequency band usually ranges from 30 gigahertz (GHz) to 300 GHz, and a wavelength range is 1 millimeter to 10 millimeters (mm).

As an example, a frequency band used by a vehicle-mounted millimeter-wave radar usually ranges from 77 GHz to 81 GHz, and a wavelength is approximately 3.9 mm.

A working principle of the millimeter-wave radar is as follows: A high-frequency circuit generates an electromagnetic wave of a specific modulation frequency; an antenna sends the electromagnetic wave and receives an electromagnetic wave reflected from a target; and parameters such as a distance, a speed, and an angle of the target are calculated based on parameters of the sent and received electromagnetic wave.

It should be noted that, in an actual use scenario, the distance of the target measured by the millimeter-wave radar is a radial distance, namely, a distance in a direction of a connection line between the millimeter-wave radar and the target. Similarly, the speed of the target measured by the millimeter-wave radar is a radial velocity, namely, a velocity in the direction of the connection line between the millimeter-wave radar and the target.

Refer to FIG. 1. Millimeter-wave radars 101 may be mounted in front and rear bumpers of the intelligent driving vehicle. A quantity of millimeter-wave radars 101 may be 4 to 6, or may be adjusted according to an actual use requirement.

The multi-domain controller 102 includes controllers of a plurality of domains of the intelligent driving vehicle, and may be understood as a central processing unit (central processing unit, CPU) of the intelligent driving vehicle. The multi-domain controller 102 is configured to undertake data computing power required for automatic traveling of the intelligent driving vehicle, including but not limited to data processing of devices such as the millimeter-wave radar, a camera, and a lidar, and is also configured to undertake security of underlying core data and network connection data under automatic driving.

For example, the multi-domain controller 102 may be configured to control a subject function of an automatic driving domain of the vehicle. The automatic driving domain has functions such as fusion analysis, positioning, path planning, wireless communication, and decision control of sensing information collected by a sensing device mounted on the intelligent driving vehicle.

Therefore, the millimeter-wave radar 101 may communicate with the multi-domain controller 102 for data exchange. For example, the millimeter-wave radar 101 may send collected parameter information to the multi-domain controller 102, or the millimeter-wave radar 101 may obtain, from the multi-domain controller 102, information collected by another sensing device. Correspondingly, the multi-domain controller 102 receives information sent by the millimeter-wave radar 101, or sends information required by the millimeter-wave radar 101.

The peripheral 11 may also be referred to as an external device or a peripheral device, and may be an output apparatus, for example, a display and/or an audio player on the intelligent driving vehicle.

The peripheral 11 may communicate with the multi-domain controller 102 for data exchange. For example, the multi-domain controller 102 may output information, for example, current meteorological information such as a wind direction, a wind speed, and a rainfall amount, to a driver or a passenger by using the peripheral 11.

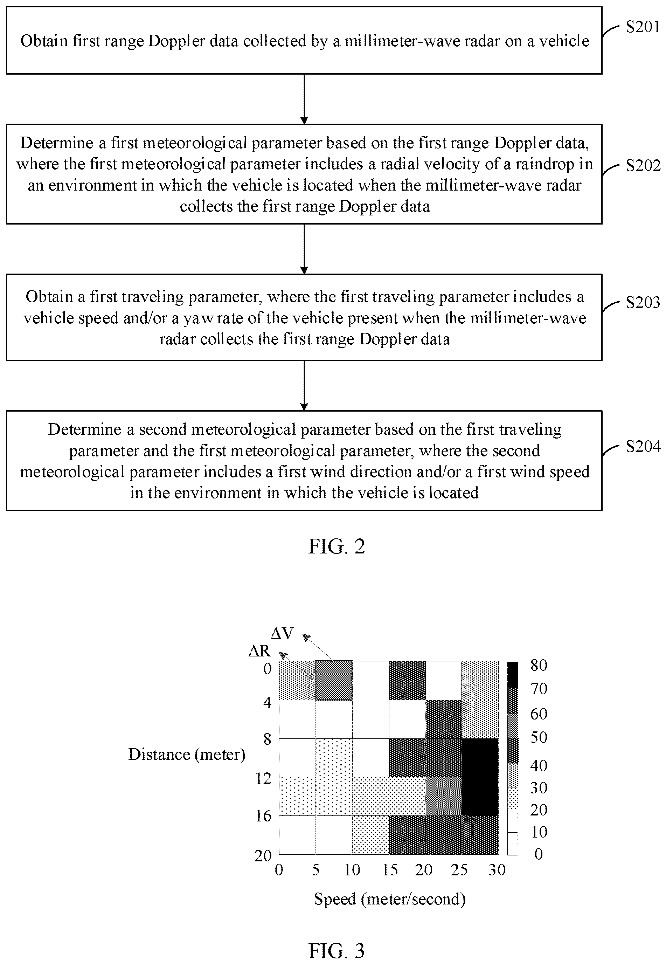

FIG. 2 is a schematic flowchart of a meteorological information processing method according to an embodiment of this application. The method may include S201, S202, S203, and S204.

The method can be implemented by a monolithic microwave integrated circuit (monolithic microwave integrated circuit, MMIC) and a micro control unit (micro control unit, MCU) in a millimeter-wave radar, or by a multi-domain controller.

S201: Obtain first range Doppler (range velocity, RV) data collected by the millimeter-wave radar on a vehicle.

The first RV data may include single-frame RV data collected by the millimeter-wave radar when the vehicle travels in a rainy environment. RV data is two-dimensional received data in a distance dimension and a Doppler dimension obtained by the millimeter-wave radar after the millimeter-wave radar receives, through a plurality of receiving channels, electromagnetic waves reflected by a target and subsequently performs signal processing and non-coherent integration (non-coherent integration, NCI) processing on the electromagnetic waves.

FIG. 3 is a diagram of the single-frame RV data according to an embodiment of this application. As shown in FIG. 3, a vertical coordinate indicates a distance between the millimeter-wave radar and a target detected by the millimeter-wave radar, in a unit of meter (m). A horizontal coordinate indicates a speed of the target detected by the millimeter-wave radar, in a unit of meter/second (m/s). A rightmost vertical axis indicates a color corresponding to intensity of reflected energy of the target detected by the millimeter-wave radar. A larger value indicates higher energy and a stronger reflection capability of the target.

The RV data may be separately divided into a plurality of distance units and a plurality of Doppler units in a distance dimension and a speed dimension. Each distance unit may also be referred to as a distance Bin, and indicates a distance resolution. Each Doppler unit may also be referred to as a Doppler Bin, and indicates a speed resolution.

The distance resolution indicates a minimum distance that is between two targets and at which the two targets are distinguished by the radar when the two targets are located in a same azimuth but have different distances from the radar in a radar image. The distance resolution indicates a capability of the radar to distinguish between two short-distance targets. Similar to the distance resolution, the speed resolution indicates a capability of the radar to distinguish between two targets with different speeds.

As shown in FIG. 3, one row indicates a distance Bin, one column indicates a Doppler Bin, and a square enclosed by ΔR and ΔV may indicate intensity of reflected energy of a target point that is detected by the millimeter-wave radar and whose distance is R and speed is V.

During actual application, the RV data may be usually indicated by using an m×n-order matrix, and is denoted as a matrix NCI, indicating that there are m distance units: $R_1$, $R_2$, and $R_m$, and n Doppler units: $V_1$, $V_2$, and $V_n$.

For example, a matrix NCI ($R_m$, $V_n$) indicates reflected energy of an element in an $m^{th}$ row and an $n^{th}$ column in the matrix NCI, namely, reflected energy of a target at a distance unit $R_m$ and a Doppler unit $V_n$.

For example, when the vehicle travels in a rainy scenario, the millimeter-wave radar mounted on the vehicle receives, through the plurality of receiving channels, the electromagnetic waves reflected by the target, and performs signal processing and NCI processing on the received electromagnetic waves, to obtain the first RV data.

If the method is performed by an apparatus other than the millimeter-wave radar, the apparatus may obtain the first RV data from the millimeter-wave radar.

Compared with a normal target object on a road, a diameter of a raindrop particle is usually 0 mm to 6 mm, and is close to a wavelength of a millimeter-wave radar commonly used on the intelligent driving vehicle, for example, close to a wavelength of a 77 GHz millimeter-wave radar on the vehicle. In addition, the raindrop particle performs backscattering on an electromagnetic wave emitted by the millimeter-wave radar, to form a backscattering echo, so that the millimeter-wave radar can detect a rain clutter formed by the raindrop particle, and the detected rain clutter is usually presented as energy rise in a cluster or a sheet region on RV data obtained by the millimeter-wave radar through processing. In addition, in addition to meteorological information (such as a rainfall amount, a wind speed, and a wind direction) and radar parameters (such as a horizontal azimuth, a pitch angle, and a mounting angle) that can affect a distribution feature of the rain clutter, vehicle parameters (such as a vehicle speed and a yaw rate) also affect the distribution feature of the rain clutter in the RV data.

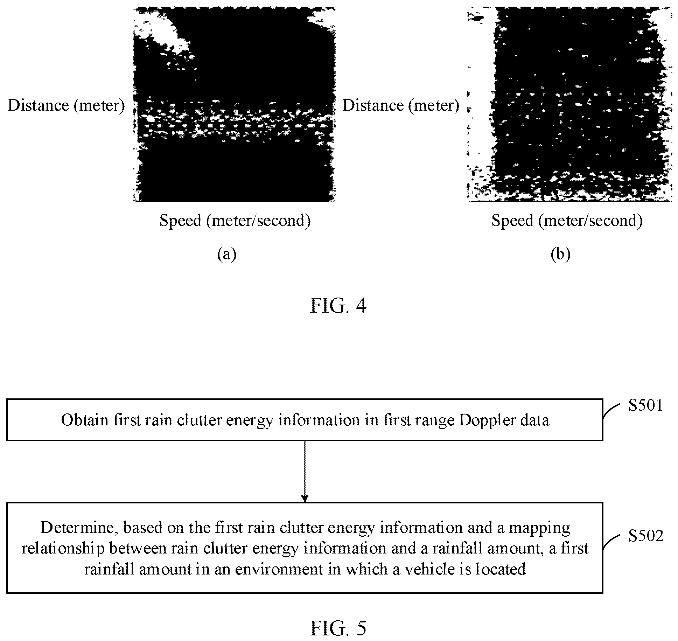

FIG. 4 is a diagram of RV data under different rainfall amount conditions according to an embodiment of this application. (a) in FIG. 4 is RV data detected by the millimeter-wave radar in a light rain scenario, and (b) in FIG. 4 is RV data detected by the millimeter-wave radar in a heavy rain scenario. A bright-color region is a rain clutter region, and higher energy of the rain clutter region indicates a larger rainfall amount.

S202: Determine a first meteorological parameter based on the first RV data, where the first meteorological parameter includes a radial velocity of a raindrop in an environment in which the vehicle is located when the millimeter-wave radar collects the first RV data.

For example, a rain clutter region may be determined from the first RV data, and the radial velocity of the raindrop may be determined from velocities corresponding to the rain clutter region.

The radial velocity of the raindrop in the environment in which the vehicle is located is within a velocity range of the rain clutter region in the first RV data collected by the millimeter-wave radar, and the velocity range includes a minimum radial velocity of the raindrop in the first RV data and a maximum radial velocity of the raindrop in the first RV data.

Optionally, the minimum radial velocity may be a positive velocity or a negative velocity, and the maximum radial velocity may be a positive velocity or a negative velocity.

For example, the radial velocity of the raindrop in the environment in which the vehicle is located may be -10 m/s to 10 m/s, 10 m/s to 20 m/s, or -10 m/s to -2 m/s.

S203: Obtain a first traveling parameter, where the first traveling parameter includes a vehicle speed and/or a yaw rate of the vehicle present when the millimeter-wave radar collects the first RV data.

In an actual traveling process of the intelligent driving vehicle, a vehicle speed sensor on the vehicle may send a vehicle speed collected in real time to the multi-domain controller. Correspondingly, the multi-domain controller receives and saves the vehicle speed. Similarly, a yaw rate sensor on the vehicle may send a yaw rate of the vehicle collected in real time to the multi-domain controller. Correspondingly, the multi-domain controller receives and saves the yaw rate.

If the method is performed by a chip or a processor in the millimeter-wave radar, the millimeter-wave radar may obtain the first traveling parameter of the vehicle from the multi-domain controller.

For example, the millimeter-wave radar may send request information to the multi-domain controller to obtain the first traveling parameter of the vehicle. After receiving the request information sent by the millimeter-wave radar, the multi-domain controller sends, to the millimeter-wave radar based on the request information, the vehicle speed and/or the yaw rate of the vehicle present when the millimeter-wave radar collects the first RV data. Correspondingly, the millimeter-wave radar receives the first traveling parameter.

S204: Determine a second meteorological parameter based on the first traveling parameter and the first meteorological parameter, where the second meteorological parameter includes a first wind direction and/or a first wind speed in the environment in which the vehicle is located.

In some implementations, the first meteorological parameter may include two radial velocities of raindrops in the environment in which the vehicle is located. One of the two radial velocities may be referred to as a first radial velocity, and the other may be referred to as a second radial velocity.

Optionally, one of the first radial velocity and the second radial velocity is the maximum radial velocity in the rain clutter region of the first RV data, and the other is the minimum radial velocity in the rain clutter region of the first RV data.

For example, the first radial velocity is the maximum radial velocity in the rain clutter region of the first RV data, and the second radial velocity is the minimum radial velocity in the rain clutter region of the first RV data.

For another example, the first radial velocity is the minimum radial velocity in the rain clutter region of the first RV data, and the second radial velocity is the maximum radial velocity in the rain clutter region of the first RV data.

Optionally, the first wind direction in the environment may be determined through establishment of a speed relationship model between a traveling parameter of the vehicle, a horizontal azimuth of the millimeter-wave radar, a wind direction, and a radial velocity of the raindrop.

For example, the speed relationship model between the traveling parameter of the vehicle, the horizontal azimuth of the millimeter-wave radar, the wind direction, and the radial velocity of the raindrop is as follows:

$$V_{rad} = V_{wind} * \cos(\emptyset - \alpha_{ins} - \theta)\cos(\beta) - V_{car} * \cos(\alpha_{yaw} - \alpha_{ins} - \theta)\cos(\beta) - (w + V_{wind\_z})\sin(\beta)$$

Herein, $V_{rad}$ is the radial velocity of the raindrop; $V_{wing}$ is a velocity of the raindrop in a horizontal wind direction; $V_{car}$ is the vehicle speed; w is a vertical falling end velocity of the raindrop, where an end velocity is a maximum velocity achieved after the raindrop moves at an accelerated speed under a force, and a maximum velocity achieved by the raindrop in a vertical direction under an action of gravity and air resistance is the vertical falling end velocity; $V_{wind\_z}$ is a moving velocity of the raindrop under an action of a vertical fluctuating wind, where a fluctuating wind is a wind whose instantaneous wind speed and instantaneous wind direction randomly change with time and space due to atmospheric turbulence; ø is the wind direction; $\alpha_{ins}$ is a mounting angle of the millimeter-wave radar; $\theta$ is a horizontal azimuth of the millimeter-wave radar for detecting a target, where a value of $\theta$ is within an angle range of a horizontal field of view (Field of View, FOV) of the millimeter-wave radar; $\beta$ is a pitch angle of the millimeter-wave radar for detecting the target, where a value of $\beta$ is within an angle range of a vertical FOV of the millimeter-wave radar; and $\alpha_{yaw}$ is a yaw rate of the vehicle, and is also referred to as a yaw angular velocity.

It should be noted that, in this embodiment, w and $V_{wind\_z}$ may be determined based on empirical values. As an example, w may be 9.65 m/s, and $V_{wind\_z}$ may range from 0.5 m/s to 0.7 m/s.

In an implementation, in the technical solution provided in this application, the millimeter-wave radar originally deployed in the intelligent driving vehicle may be reused. In this case, parameter information such as the mounting angle $\alpha_{ins}$ of the millimeter-wave radar on the intelligent driving vehicle, the angle range $\theta$ of the horizontal FOV, and the angle range $\beta$ of the vertical FOV needs to be obtained in advance.

In this implementation, values of w, $V_{wind\_z}$, and the obtained parameter information of the millimeter-wave radar may be configured in the vehicle, for example, configured in the millimeter-wave radar or the multi-domain controller.

In another implementation, if no millimeter-wave radar is mounted on an existing intelligent driving vehicle, the millimeter-wave radar needs to be mounted on the intelligent driving vehicle, and related parameter information of the mounted and debugged millimeter-wave radar and/or the values of w and $V_{wind\_z}$ are configured in the millimeter-wave radar or the multi-domain controller of the vehicle.

Optionally, the value of $\beta$ may be $\pm$ 10°.

For ease of description, a right-side relational expression of the speed relational model may be referred to as a first relational expression as follows:

$$V_{wind} * \cos(\emptyset - \alpha_{ins} - \theta)\cos(\beta) - V_{car} * \cos(\alpha_{yaw} - \alpha_{ins} - \theta)\cos(\beta) - (w + V_{wind\_z})\sin(\beta)$$

It should be noted that, in the radar field, a velocity at which a target approaches a radar is a negative velocity, and a velocity at which the target moves away from the radar is a positive velocity. Therefore, minus signs before a second term and a third term in the first relational expression indicate that the raindrop is approaching the millimeter-wave radar at this time.

In the first relational expression, a first item $V_{wind} * COS(\emptyset - \alpha_{ins} - \theta) COS(\beta)$ is a horizontal velocity of the raindrop under an action of a wind in a horizontal direction, the second item $V_{car} * \cos(\alpha_{yaw} - \alpha_{ins} - \theta) \cos(\beta)$ is a horizontal velocity of the raindrop caused by the vehicle speed, and the third item $(w + V_{wind\_z})\sin(\beta)$ is a vertical velocity of the raindrop. Therefore, the first item and the second item may be collectively referred to as a horizontal velocity $V_{hori}$ of the raindrop, and the third item may be referred to as a vertical velocity $V_{vert}$ of the raindrop.

In this case,

$$V_{hori} = V_{wind} * \cos(\emptyset - \alpha_{ins} - \theta)\cos(\beta) - V_{car} * \cos(\alpha_{yaw} - \alpha_{ins} - \theta)\cos(\beta)$$

$$V_{vert} = (w + V_{wind\_z})\sin(\beta)$$

Optionally, to improve efficiency of detecting the first wind direction/the first wind speed, $V_{hori}$ in the first relational expression may be further simplified.

Given that in an actual application scenario, the pitch angle of the millimeter-wave radar is $\pm 10°$, and $\cos(\pm 10°)$ is 0.985, which is approximately equal to 1, $V_{hori}$ may be simplified into the following formula:

$$V_{hori} = V_{wind} * \cos(\emptyset - \alpha_{ins} - \theta) - V_{car} * \cos(\alpha_{yaw} - \alpha_{ins} - \theta)$$

In a possible implementation, the first traveling parameter and a first horizontal azimuth of the millimeter-wave radar may be substituted into the first relational expression, to obtain a second relational expression. The first traveling parameter and a second horizontal azimuth of the millimeter-wave radar may be substituted into the first relational expression, to obtain a third relational expression. A fourth relational expression between the second relational expression, the third relational expression, the first radial velocity, and the second radial velocity is established, and different ø (0° to 360°) is traversed in the fourth relational expression, so that the first wind direction may be determined. The first wind direction is ø that makes the fourth relational expression hold. One of the first horizontal azimuth and the second horizontal azimuth is a maximum horizontal azimuth of the FOV range of the millimeter-wave radar, and the other is a minimum horizontal azimuth of the FOV range of the millimeter-wave radar.

The fourth relational expression is as follows:

$$\frac{\text{First radial velocity}}{\text{Second radial velocity}} = \frac{\text{Second relational expression}}{\text{Third relational expression}}$$

When ø is traversed, determining of the first horizontal azimuth and the second horizontal azimuth needs to meet a condition: In this case, a value relationship between a cosine value of a difference obtained by subtracting the mounting angle of the millimeter-wave radar and the first horizontal azimuth from the traversed ø and a cosine value of a difference obtained by subtracting the mounting angle of the millimeter-wave radar and the second horizontal azimuth from the traversed ø is the same as a value relationship between the first radial velocity and the second radial velocity.

For example, if the first radial velocity is the maximum radial velocity in the first RV data, when ø is traversed, the cosine value of the difference obtained by subtracting the mounting angle of the millimeter-wave radar and the first horizontal azimuth from ø should be greater than the cosine value of the difference obtained by subtracting the mounting angle of the millimeter-wave radar and the second horizontal azimuth from ø.

Correspondingly, if the first radial velocity is the minimum radial velocity in the first RV data, when ø is traversed, the cosine value of the difference obtained by subtracting the mounting angle of the millimeter-wave radar and the first horizontal azimuth from ø should be less than the cosine value of the difference obtained by subtracting the mounting angle of the millimeter-wave radar and the second horizontal azimuth from ø.

For example, it is set that $\alpha_{ins}$ is 20°, θ is $\pm 60°$, the first radial velocity is the maximum radial velocity in the first RV data, and the traversed ø is 30°.

In this case, assuming that the first horizontal azimuth is the maximum horizontal azimuth 60° of the FOV range of the millimeter-wave radar, and the second horizontal azimuth is the minimum horizontal azimuth -60° of the FOV range of the millimeter-wave radar, the cosine value of the difference obtained by subtracting the mounting angle of the millimeter-wave radar and the first horizontal azimuth from ø is $\cos(\emptyset - \alpha_{ins} - \theta) = \cos(30° - 20° - 60°) = 0.96$, and the cosine value of the difference obtained by subtracting the mounting angle of the millimeter-wave radar and the second horizontal azimuth from ø is $\cos(\emptyset - \alpha_{ins} - \theta) = \cos(30° - 20° + 60°) = 0.63$. Because 0.96 is greater than 0.63, the condition is met. This indicates that the assumption is true.

Therefore, in this example, the first horizontal azimuth is the maximum horizontal azimuth of the FOV range of the millimeter-wave radar, and the second horizontal azimuth is the minimum horizontal azimuth of the FOV range of the millimeter-wave radar.

Further, in this example, if the traversed ø is equal to 30° at this time and makes the fourth relational expression equal, the first wind direction is 30°; otherwise, ø is reselected, and the first horizontal azimuth and the second horizontal azimuth are re-determined, until the traversed ø makes the fourth relational expression equal.

Optionally, when the wind direction is traversed in the fourth relational expression, a variation of the wind direction may be preset. For example, the variation may be 1° or 10°.

For example, the wind direction may be traversed in a form of 0°, 1°, ..., and 360°, or the wind direction may be traversed in a form of 0°, 10°, ..., and 360°.

In this embodiment, after the first wind direction is determined based on the first traveling parameter and the first meteorological parameter, a first velocity of the raindrop in the horizontal wind direction in the environment may be further determined based on the first meteorological parameter, the first relational expression, the first wind direction, and the first traveling parameter.

For example, the first wind direction, the first traveling parameter, and the first meteorological parameter are substituted into the foregoing speed relationship model, to determine the first velocity.

It should be understood that, after the first wind direction, the first traveling parameter, and the first meteorological parameter are substituted into the foregoing speed relationship model, an unknown quantity in the speed relationship model is only $V_{wind}$, so that the first velocity can be determined. The first velocity may make a radial velocity obtained by substituting the first wind direction and the first traveling parameter into the first relational expression be equal to the first meteorological parameter.

When the first velocity of the raindrop in the horizontal wind direction in the environment is determined, the horizontal azimuth of the millimeter-wave radar for detecting the target in the first relational expression should correspond to the first meteorological parameter.

For example, the first horizontal azimuth corresponds to the first radial velocity, and the second horizontal azimuth corresponds to the second radial velocity.

For example, if the horizontal azimuth of the millimeter-wave radar is the first horizontal azimuth, when the first velocity is determined through substitution of the first wind direction and the first traveling parameter into the first relational expression, the first velocity makes a radial velocity obtained by substituting the first wind direction and the first traveling parameter into the first relational expression be equal to the first radial velocity.

For another example, if the horizontal azimuth of the millimeter-wave radar is the second horizontal azimuth, when the first velocity is determined through substitution of the first wind direction and the first traveling parameter into the first relational expression, the first velocity makes a radial velocity obtained by substituting the first wind direction and the first traveling parameter into the first relational expression be equal to the second radial velocity.

Optionally, when the first velocity of the raindrop in the horizontal wind direction in the environment is determined, the first velocity may further make the radial velocity obtained by substituting the first wind direction and the first traveling parameter into the first relational expression be proportional to the first meteorological parameter. The method for determining the first velocity provided in this embodiment is merely an example.

In the meteorological field, there is a relational expression based on a drag coefficient between a velocity of a raindrop in the horizontal wind direction and an actual wind speed. Therefore, the first wind speed may be determined based on the first velocity and a relational expression between the velocity of the raindrop in the horizontal wind direction and the wind speed.

In this technical solution, a relationship between the RV data collected by the millimeter-wave radar and the radial velocity of the raindrop is fully used to obtain the radial velocity of the raindrop based on the RV data collected by the millimeter-wave radar, and the wind direction and/or the wind speed in the traveling environment of the vehicle are/is determined based on the radial velocity of the raindrop, thereby helping manage or control the vehicle based on the wind direction and/or the wind speed, and improving traveling safety of the vehicle in more traveling scenarios.

In addition, in the technical solution of this application, the wind direction and/or the wind speed in the traveling environment are further determined through full consideration of the traveling speed and/or the yaw rate of the vehicle, so that accuracy of the obtained wind direction and/or the obtained wind speed can be improved, thereby helping improve traveling safety of the vehicle.

This application further provides a method for detecting, based on energy information in RV data, a rainfall amount in an environment in which a vehicle is located. FIG. 5 is a schematic flowchart of the method for determining the rainfall amount based on rain clutter energy information. The method includes S501 and S502.

S501: Obtain first rain clutter energy information in first RV data.

The first rain clutter energy information indicates a sum of energy of all rain clutter regions in the first RV data.

In a possible implementation, rain clutter energy information in each distance unit volume in the first RV data may be obtained, and a sum of rain clutter energy information of all distance units is used as the first rain clutter energy information.

In another possible implementation, rain clutter energy information in each Doppler unit volume in the first RV data may be obtained, and a sum of rain clutter energy information of all Doppler units is used as the first rain clutter energy information.

S502: Determine, based on the first rain clutter energy information and a mapping relationship between rain clutter energy information and a rainfall amount, a first rainfall amount in the environment in which the vehicle is located.

An NCI table may indicate the mapping relationship between the rain clutter energy information and the rainfall amount, and the NCI table may be pre-configured in a millimeter-wave radar.

For example, the rain clutter energy information may be obtained through calculation by using the following formula:

$$P_r = \frac{P_t G_t G_r \lambda^2 \sigma}{(4\pi)^3 R^4}$$

Herein, $P_r$ is rain clutter energy received by the millimeter-wave radar in one distance unit volume; Pt is a transmit power of the millimeter-wave radar; $G_t$ is a gain of a transmit antenna; $G_r$ is a gain of a receive antenna; $\lambda$ is a wavelength of an electromagnetic wave transmitted by the millimeter-wave radar; R indicates a distance between a raindrop particle and the millimeter-wave radar; and $\sigma$ is a radar cross section (radar cross section, RCS) area of a raindrop in one distance unit volume.

$\sigma$ can be associated with the rainfall amount by using the following relational expression:

$$\sigma = \eta V$$

Herein, $\eta$ is reflectivity and indicates an RCS of a raindrop in a unit volume, and V is a volume of a rain field at one distance unit dR away from the millimeter-wave radar.

$$\eta = \int_0^\infty \sigma(\lambda, D)\, N_D(D) dD$$

$$N_D(D) = N_0 \exp(-4.1 I^{-0.21} D)$$

Herein, $\sigma(\lambda, D)$ is a radar cross section area of a single raindrop; $N_D(D)$ is a distribution size of the raindrop and indicates a quantity of raindrop particles whose diameters range between (D, D+dD) in a unit volume; $N_0$ is a constant and is usually 0.08; D is a diameter of the raindrop; and I is the rainfall amount.

It should be understood that the rainfall amount I is a depth of a water layer that lands at a point or a unit area on the ground within a specific time, in a unit of millimeter/hour (mm/h), and is irrelevant to an external factor, for example, the radar or the vehicle. It may also be understood that rainfall amounts in all distance unit volumes in the first RV data obtained by the millimeter-wave radar are equal.

V may be indicated by a field volume corresponding to one distance unit dR in a FOV of the millimeter-wave radar, namely, a field volume of [R, R+dR]:

$$V = \frac{4\pi[(R + dR)^3 - R^3]}{3} \frac{\theta\beta}{4\pi^2}$$

Herein, dR may also be understood as a distance resolution of the radar, $\theta$ is a horizontal azimuth of the millimeter-wave radar for detecting a target, and $\beta$ is a pitch angle of the millimeter-wave radar for detecting the target.

Therefore, a correspondence between a rain clutter energy $P_r$ and a rainfall amount I in one distance unit volume may be established by using the foregoing formula, and an NCI table is established based on the correspondence.

For ease of description, the correspondence between the rain clutter energy $P_r$ and the rainfall amount I in the distance unit volume is denoted as a fifth relational expression.

For example, the rainfall amount is set to 1 mm/h, and the rainfall amount is substituted into the fifth relational expression, to obtain a sixth relational expression. Different distances R are substituted into the sixth relational expression, so that rain clutter energy in each distance unit volume can be obtained. R is located in the FOV of the millimeter-wave radar.

A sum of rain clutter energy in the distance unit volumes is used as rain clutter energy information corresponding to the rainfall amount, and is recorded in the NCI table.

Similarly, the NCI table between the rain clutter energy and the rainfall amount may be established through calculation of rain clutter energy information corresponding to different rainfall amounts.

Therefore, in this embodiment, the first rainfall amount in the environment in which the vehicle is located may be determined based on the first rain clutter energy information and the mapping relationship between the rain clutter energy information and the rainfall amount.

In this embodiment, the correspondence between the rain clutter energy information and the rainfall amount is determined through establishment of a rain clutter reflection model, so that the rainfall amount in the environment in which the vehicle is located can be determined based on the rain clutter energy information, thereby improving accuracy of a result.

In some embodiments of this application, S201 to S204, S501, and S502 may be included.

In embodiments of this application, optionally, whether the environment in which the vehicle is located is a rainy environment may be first determined. When the vehicle is in the rainy environment, S204 is performed, S203 and S204 are performed, or S202 and S204 are performed, so that resources can be saved.

In embodiments of this application, optionally, whether the environment in which the vehicle is located is the rainy environment may be first determined. When the vehicle is in the rainy environment, S502 is performed, or S501 and S502 are performed, so that resources can be saved.

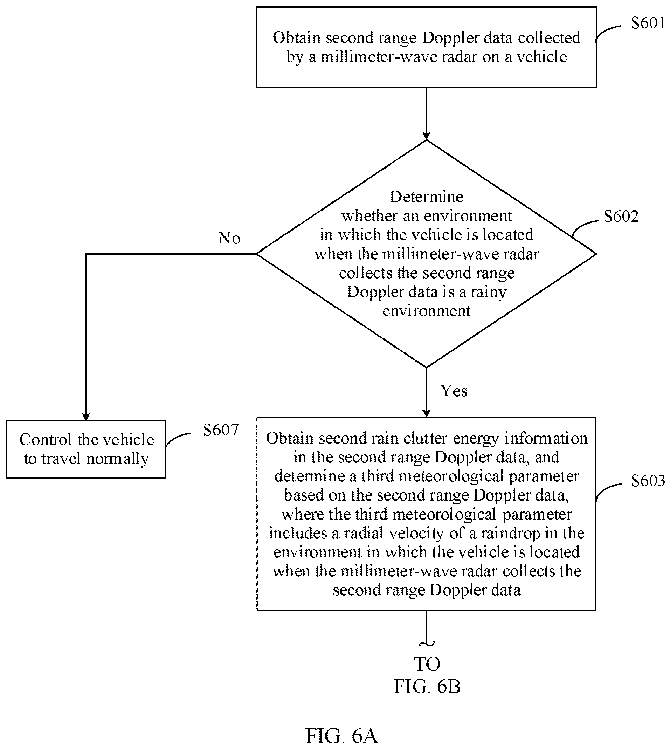

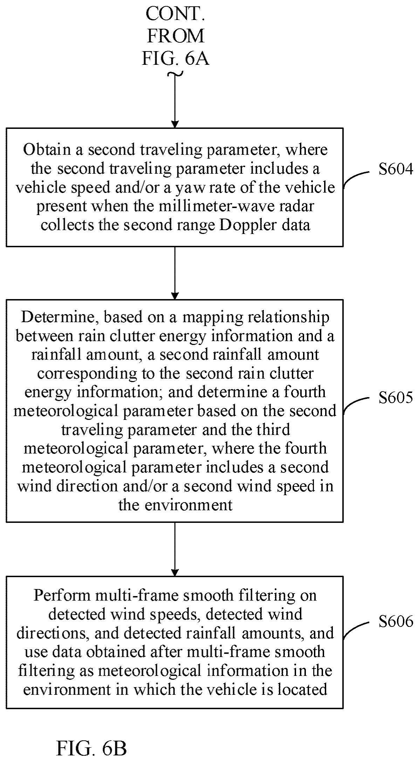

FIG. 6A and FIG. 6B are a schematic flowchart of a meteorological information processing method according to another embodiment of this application. The method includes S601 to S607.

S601: Obtain second RV data collected by a millimeter-wave radar on a vehicle.

For this step, refer to S201. Details are not described herein again.

S602: Determine whether an environment in which the vehicle is located when the millimeter-wave radar collects the second RV data is a rainy environment. If the environment in which the vehicle is located is the rainy environment, S603 to S606 are performed; otherwise, S607 is performed.

S603: Obtain second rain clutter energy information in the second RV data, and determine a third meteorological parameter based on the second RV data, where the third meteorological parameter includes a radial velocity of a raindrop in the environment in which the vehicle is located when the millimeter-wave radar collects the second RV data.

For this step, refer to S501 and S202. Details are not described herein again.

S604: Obtain a second traveling parameter, where the second traveling parameter includes a vehicle speed and/or a yaw rate of the vehicle present when the millimeter-wave radar collects the second RV data.

For this step, refer to S203. Details are not described herein again.

S605: Determine, based on a mapping relationship between rain clutter energy information and a rainfall amount, a second rainfall amount corresponding to the second rain clutter energy information; and determine a fourth meteorological parameter based on the second traveling parameter and the third meteorological parameter, where the fourth meteorological parameter includes a second wind direction and/or a second wind speed in the environment.

For this step, refer to S502 and S204. Details are not described herein again.

S606: Perform multi-frame smooth filtering on detected wind speeds, detected wind directions, and detected rainfall amounts, and use data obtained after multi-frame smooth filtering as meteorological information in the environment in which the vehicle is located.

Optionally, to further improve accuracy and robustness of detection results of the wind directions, the wind speeds, and the rainfall amounts, multi-frame smooth filtering may be performed on meteorological information obtained through calculation based on single-frame RV data, for example, data of wind speeds, wind directions, and rainfall amounts.

For example, an average value of a first wind direction calculated based on first RV data and the second wind direction calculated based on the second RV data is used as a final detection result of the first RV data/the second RV data.

An average value of a first wind speed calculated based on the first RV data and the second wind speed calculated based on the second RV data is used as a final detection result of the first RV data/the second RV data.

An average value of a first rainfall amount calculated based on the first RV data and the second rainfall amount calculated based on the second RV data is used as a final detection result of the first RV data/the second RV data.

It should be noted that, when multi-frame smooth filtering is performed on the wind directions, the wind speeds, and the rainfall amounts that are calculated based on the single-frame RV data, a quantity of frames of the RV data is not limited to two.

Optionally, medians of wind directions, wind speeds, and rainfall amounts that are calculated based on a plurality of pieces of single-frame RV data may alternatively be used as final detection results.

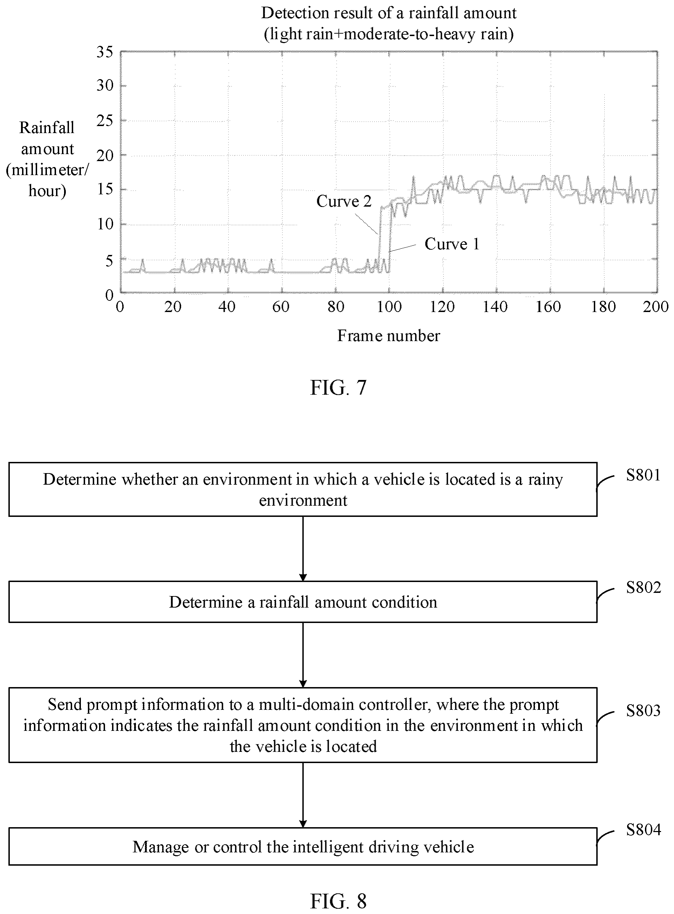

FIG. 7 is a diagram of a rainfall amount detection result according to an embodiment of this application. As shown in FIG. 7, data in frames 0 to 100 corresponds to a light rain scenario, and a rainfall amount estimation value is 3 mm/h. Data in frames 100 to 200 corresponds to a moderate-to-heavy rain scenario, and a rainfall amount estimation value is 15 mm/h. Fluctuation of the rainfall amount estimation value is $\pm 2$ mm/h.

In FIG. 7, a curve 1 is rainfall amount data obtained by detecting single-frame RV data, and it can be seen that the curve 1 fluctuates greatly. A curve 2 is a data curve obtained after multi-frame smooth filtering is performed on the curve 1, and it can be seen that the curve 2 is smooth.

Optionally, after the meteorological information of the environment in which the vehicle is located is determined, the millimeter-wave radar may adjust or calibrate a parameter of the millimeter-wave radar based on the determined meteorological information, to suppress a rain clutter, thereby improving reliability and accuracy of the millimeter-wave radar.

S607: Control the vehicle to travel normally.

When the environment in which the vehicle is located is not a rainy scenario, an MDC may control, based on sensing information detected by a sensing device, the vehicle to travel normally based on a planned traveling route.

Optionally, after the millimeter-wave radar detects a rainfall amount, the millimeter-wave radar may output prompt information to the MDC of the intelligent driving vehicle. The prompt information indicates a rainfall amount condition in the environment in which the vehicle is located.

For example, FIG. 8 is a schematic flowchart of a meteorological information alarm method according to an embodiment of this application. As shown in FIG. 8, the method includes S801 to S804.

S801: Determine whether an environment in which a vehicle is located is a rainy environment.

In a possible implementation, strength of rain clutter energy detected by a millimeter-wave radar may reflect a value of a rainfall amount. Therefore, rain clutter energy in RV data collected by the millimeter-wave radar may be analyzed, so that a rainfall amount in the environment in which the vehicle is located may be determined, and whether the environment is the rainy environment may be determined.

In some implementations, after the rainfall amount in the environment in which the vehicle is located may be measured in another manner, whether the current environment is the rainy environment may be determined based on the rainfall amount. For example, if the rainfall amount is less than or equal to a rainfall amount threshold, the environment is determined as a non-rainy environment; otherwise, the environment may be determined as the rainy environment. The rainfall amount threshold may be adjusted based on an actual situation.

S802: Determine a rainfall amount condition.

Optionally, the rainfall amount condition may be classified into levels such as no rain, light rain, and heavy rain.

For example, when the environment in which the vehicle is located is the non-rainy environment, the rainfall amount condition is no rain. When the environment in which the vehicle is located is the rainy environment, the rainfall amount condition needs to be further determined.

For example, the rainfall amount condition may be determined through comparison between the rainfall amount in the environment in which the vehicle is located and a specified threshold (threshold, Thr) of a heavy rainfall amount. The threshold may be adjusted based on an actual situation.

For example, if the rainfall amount is less than the threshold, the rainfall amount condition is light rain; or if the rainfall amount is greater than or equal to the threshold, the rainfall amount condition is heavy rain. A determining criterion is as follows:

$$\begin{cases} I_{est} < Thr, light\ rain \\ I_{est} \geq Thr, heavy\ rain \end{cases}$$

Herein, $I_{est}$ is the rainfall amount in the environment in which the vehicle is located.

Optionally, the rainfall amount condition may further include a level, for example, moderate rain, rainstorm, heavy rainstorm, and extremely heavy rainstorm.

S803: Send prompt information to an MDC, where the prompt information indicates the rainfall amount condition in the environment in which the vehicle is located.

For example, after the rainfall amount condition in the environment in which the vehicle is located is determined, the prompt information may be sent to the MDC.

Optionally, if the method is performed by a chip or a processor in the millimeter-wave radar, the millimeter-wave radar sends the prompt information to the MDC.

Optionally, the prompt information may further include information such as a wind direction and a wind speed.

S804: Manage or control the intelligent driving vehicle.

After receiving the prompt information, the MDC may manage or control the intelligent driving vehicle based on the rainfall amount condition, thereby helping improve traveling safety of the vehicle in more traveling scenarios.

For example, when the rainfall amount condition in the environment in which the vehicle is located is heavy rain, the MDC may disable or degrade an automatic driving function of the intelligent driving vehicle, to improve traveling safety of the vehicle.

Optionally, the MDC may further prompt a driver or a passenger by using some interaction interfaces of a peripheral of the intelligent driving vehicle, including controlling a speaker to play prompt information, displaying prompt information by using a central control screen, or the like, to improve riding safety of a user.

Optionally, the technical solutions or technical ideas provided in this application may be applied to a vehicle sensing system, to measure one or more pieces of meteorological information of a wind speed, a wind direction, or a rainfall amount in the environment in which the vehicle is located; may be applied to a radar of another band, for example, a meteorological radar; or may be applied to another field, for example, a lidar field.

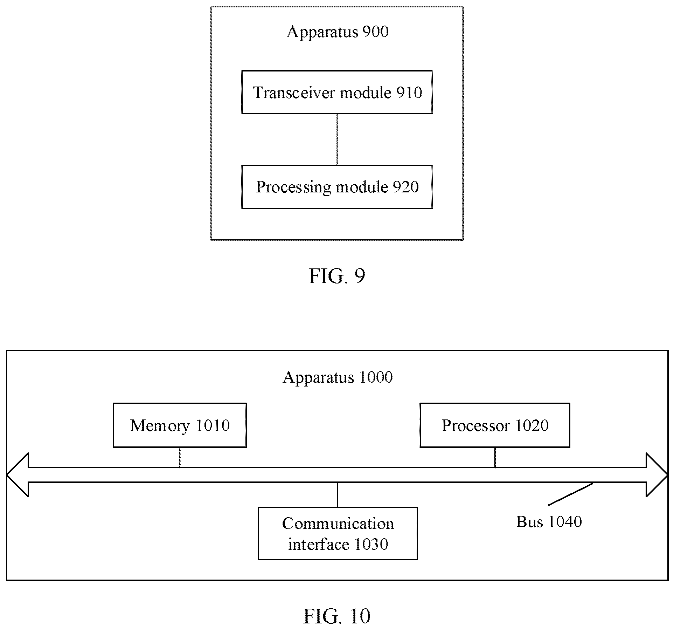

FIG. 9 is a diagram of a structure of a meteorological information processing apparatus according to an embodiment of this application. As shown in FIG. 9, the apparatus 900 in this embodiment may include a transceiver module 910 and a processing module 920.

When the apparatus 900 is configured to implement the method shown in FIG. 2, the transceiver module 910 may be configured to implement S201 and S203, and the processing module 920 may be configured to implement S203 and S204.

When the apparatus 900 is configured to implement the method shown in FIG. 5, the transceiver module 910 may be configured to implement S501, and the processing module 920 may be configured to implement S502.

When the apparatus 900 is configured to implement the method shown in FIG. 6A and FIG. 6B, the transceiver module 910 may be configured to implement S601, S603, and S604, and the processing module 920 may be configured to implement S602, S603, S605, S606, and S607.

When the apparatus 900 is configured to implement the method shown in FIG. 8, the transceiver module 910 may be configured to implement S803, and the processing module 920 may be configured to implement S801, S802, and S804.

It should be understood that the apparatus 900 is embodied in a form of functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 900 may be specifically the processing apparatus in the foregoing method embodiments, or functions of the processing apparatus in the foregoing method embodiments may be integrated into the apparatus 900. The apparatus 900 may be configured to perform procedures and/or steps corresponding to the processing apparatus in the foregoing method embodiments. To avoid repetition, details are not described herein again.

The apparatus 900 has a function of implementing corresponding steps performed by the processing apparatus in the foregoing method embodiments. The foregoing functions may be implemented by hardware, or may be implemented by hardware executing corresponding software. The hardware or the software includes one or more modules corresponding to the function.

FIG. 10 is a diagram of a structure of a meteorological information processing apparatus according to another embodiment of this application. The apparatus 1000 shown in FIG. 10 may be configured to perform the method performed by the processing apparatus in any one of the foregoing methods.

As shown in FIG. 10, the apparatus 1000 in this embodiment includes: a memory 1010, a processor 1020, a communication interface 1030, and a bus 1040. The memory 1010, the processor 1020, and the communication interface 1030 implement mutual communication connections through the bus 1040.

The memory 1010 may be a read-only memory (read-only memory, ROM), a static storage device, a dynamic storage device, or a random access memory (random access memory, RAM). The memory 1010 may store a program. When the program stored in the memory 1010 is executed by the processor 1020, the processor 1020 is configured to perform the method performed by the processing apparatus in any one of the foregoing methods.

The processor 1020 may be a general-purpose central processing unit (central processing unit, CPU), a microprocessor, an application-specific integrated circuit (application-specific integrated circuit, ASIC), or one or more integrated circuits, and is configured to execute a related program.

The processor 1020 may alternatively be an integrated circuit chip and has a signal processing capability. In an implementation process, the related steps in embodiments of this application may be completed by using a hardware integrated logic circuit or an instruction in a form of software in the processor 1020.

The processor 1020 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 1010. The processor 1020 reads information in the memory 1010, and completes, in combination with hardware of the processor 1020, functions that need to be performed by units included in the apparatus in this application.

The communication interface 1030 may use, but not limited to, a transceiver apparatus of a transceiver type, to implement communication between the apparatus 1000 and another device or an apparatus.

The bus 1040 may include a path for transmitting information between components (for example, the memory 1010, the processor 1020, and the communication interface 1030) of the apparatus 1000.

Some embodiments of this application further provide a computer program product. For example, when meteorological information is processed and the computer program product is run on a processor, the method implemented by the processing apparatus in any one of the foregoing embodiments may be implemented. Some embodiments of this application further provide a computer-readable storage medium. The computer-readable storage medium includes computer instructions. When the computer instructions are run on a processor, the method implemented by the processing apparatus in any one of the foregoing embodiments may be implemented.

It should be noted that the modules or components in the foregoing embodiments may be configured as one or more integrated circuits for implementing the foregoing methods, for example, one or more application-specific integrated circuits (application-specific integrated circuits, ASIC), one or more microprocessors (digital signal processors, DSP), or one or more field programmable gate arrays (field programmable gate arrays, FPGA). For another example, when one of the foregoing modules is implemented in a form in which a processing element schedules program code, the processing element may be a general-purpose processor, for example, a central processing unit (central processing unit, CPU) or another processor that may invoke the program code, for example, a controller. For another example, the modules may be integrated and implemented in a form of system-on-a-chip (system-on-a-chip, SoC).

All or some of the foregoing embodiments may be implemented by using software, hardware, firmware, software modules or any combination thereof. When software is used to implement embodiments, all or some of the embodiments may be implemented in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The term "a plurality of" in this specification indicates two or more. The term "and/or" in this specification merely describes an association relationship between associated objects and indicates that three relationships may exist. For example, A and/or B may indicate the following three cases: Only A exists, both A and B exist, and only B exists. In addition, a character "/" in this specification usually indicates an "or" relationship between associated objects, and a character "/" in a formula usually indicates a "divisible" relationship between associated objects. In addition, it should be understood that in description of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. A meteorological information processing method, comprising:

   obtaining first range Doppler RV data collected by a millimeter-wave radar on a vehicle;
   obtaining a first traveling parameter, wherein the first traveling parameter comprises a vehicle speed and/or a yaw rate of the vehicle present when the millimeter-wave radar collects the first RV data;
   determining a first meteorological parameter based on the first RV data, wherein the first meteorological parameter comprises a radial velocity of a raindrop in an environment in which the vehicle is located when the millimeter-wave radar collects the first RV data; and
   determining a second meteorological parameter based on the first traveling parameter and the first meteorological parameter, wherein the second meteorological parameter comprises a first wind direction and/or a first wind speed in the environment.

2. The method according to claim 1, wherein the first meteorological parameter comprises a first radial velocity and a second radial velocity of the raindrop in the environment; and
the determining the first wind direction based on the first traveling parameter and the first meteorological parameter comprises:

substituting the first traveling parameter and a first horizontal azimuth of the millimeter-wave radar into a first relational expression, to obtain a second relational expression, wherein the first relational expression is a relational expression for determining a radial velocity of the raindrop based on a traveling parameter of the vehicle, a horizontal azimuth of the millimeter-wave radar, the radial velocity of the raindrop, and a wind direction; substituting the first traveling parameter and a second horizontal azimuth of the millimeter-wave radar into the first relational expression, to obtain a third relational expression; and

determining the first wind direction according to the second relational expression, the third relational expression, the first radial velocity, and the second radial velocity, wherein the first wind direction makes a ratio of the second relational expression to the third relational expression be equal to a ratio of the first radial velocity to the second radial velocity, and a value relationship between a cosine value of a difference obtained by subtracting a mounting angle of the millimeter-wave radar and the first horizontal azimuth from the first wind direction and a cosine value of a difference obtained by subtracting the mounting angle of the millimeter-wave radar and the second horizontal azimuth from the first wind direction is the same as a value relationship between the first radial velocity and the second radial velocity.

3. The method according to claim 2, wherein one of the first radial velocity and the second radial velocity is a maximum radial velocity in the first RV data, and the other is a minimum radial velocity in the first RV data; and
one of the first horizontal azimuth and the second horizontal azimuth is a maximum horizontal azimuth of a field of view range of the millimeter-wave radar, and the other is a minimum horizontal azimuth of the field of view range of the millimeter-wave radar.

4. The method according to claim 2 or 3, wherein the first relational expression comprises the following relational expression:

$$V_{wind} * \cos(\emptyset - \alpha_{ins} - \theta)\cos(\beta) - V_{car}\cos(\alpha_{yaw} - \alpha_{ins} - \theta)\cos(\beta) - (w + V_{wind\_z})\sin(\beta),$$

wherein
$V_{wind}$ is a velocity of the raindrop in a horizontal wind direction, $V_{car}$ is a vehicle speed of the vehicle, w is a vertical falling end velocity of the raindrop, $V_{wind\,z}$ is a moving velocity of the raindrop under an action of a vertical fluctuating wind, ø is a wind direction, $\alpha_{ins}$ is the mounting angle of the millimeter-wave radar, $\theta$ is a horizontal azimuth of the millimeter-wave radar for detecting a target, $\beta$ is a pitch angle of the millimeter-wave radar for detecting the target, and $\alpha_{yaw}$ is a yaw rate of the vehicle.

5. The method according to any one of claims 2 to 4, wherein the determining the first wind speed based on the first traveling parameter and the first meteorological parameter comprises:

determining a first velocity of the raindrop in the horizontal wind direction in the environment based on the first meteorological parameter, the first relational expression, the first wind direction, and the first traveling parameter, wherein the first velocity makes a radial velocity obtained by substituting the first wind direction and the first traveling parameter into the first relational expression be equal to the first meteorological parameter; and
determining the first wind speed based on the first velocity and a relational expression between a speed of the raindrop in the horizontal wind direction and a wind speed.

6. The method according to any one of claims 1 to 5, wherein before the determining a first meteorological parameter based on the first RV data, the method further comprises: determining that the environment is a rainy environment.

7. The method according to any one of claims 1 to 6, wherein the method further comprises:

obtaining second RV data collected by the millimeter-wave radar;
obtaining a second traveling parameter, wherein the second traveling parameter comprises a vehicle speed and/or a yaw rate of the vehicle present when the millimeter-wave radar collects the second RV data;
determining a third meteorological parameter based on the second RV data, wherein the third meteorological parameter comprises a radial velocity of a raindrop in an environment in which the vehicle is located when the millimeter-wave radar collects the second RV data;

determining a fourth meteorological parameter based on the second traveling parameter and the third meteorological parameter, wherein the fourth meteorological parameter comprises a second wind direction and/or a second wind speed in the environment; and

determining a fifth meteorological parameter based on an average value of the second meteorological parameter and the fourth meteorological parameter, wherein the fifth meteorological parameter comprises a third wind direction and/or a third wind speed in the environment in which the vehicle is located.

8. The method according to any one of claims 1 to 7, wherein the method further comprises:

obtaining first rain clutter energy information in the first RV data; and

determining a first rainfall amount in the environment based on the first rain clutter energy information and a mapping relationship between rain clutter energy information and a rainfall amount.

9. The method according to claim 8, wherein the method further comprises:

obtaining second rain clutter energy information in the second RV data collected by the millimeter-wave radar; and

determining, based on the mapping relationship between the rain clutter energy information and the rainfall amount, a second rainfall amount corresponding to the second rain clutter energy information; and

the determining a first rainfall amount in the environment based on the first rain clutter energy information and a mapping relationship between rain clutter energy information and a rainfall amount comprises:

determining, based on the mapping relationship between the rain clutter energy information and the rainfall amount, a third rainfall amount corresponding to the first rain clutter energy information; and

determining the first rainfall amount based on an average value of the third rainfall amount and the second rainfall amount.

10. The method according to claim 8 or 9, wherein the method further comprises:
outputting prompt information based on the first rainfall amount, wherein the prompt information indicates a rainfall amount condition in the environment.

11. The method according to claim 10, wherein when the first rainfall amount is less than or equal to a first threshold, the rainfall amount condition comprises no rain;

when the first rainfall amount is greater than or equal to a second threshold, the rainfall amount condition comprises heavy rain; or

when the first rainfall amount is greater than the first threshold and less than the second threshold, the rainfall amount condition comprises light rain.

12. A meteorological information processing apparatus, comprising functional modules configured to implement the method according to any one of claims 1 to 11.

13. A meteorological information processing apparatus, comprising a memory and a processor, wherein

the memory is configured to store program instructions; and

the processor is configured to invoke the program instructions in the memory, to perform the method according to any one of claims 1 to 11.

14. A millimeter-wave radar, wherein the millimeter-wave radar comprises the processing apparatus according to claim 13.

15. A vehicle, wherein the vehicle comprises the processing apparatus according to claim 12 or 13, or comprises the millimeter-wave radar according to claim 14.

16. A computer-readable medium, wherein the computer-readable medium stores program code to be executed by a computer, and the program code comprises instructions for performing the method according to any one of claims 1 to 11.

**17.** A computer program product, comprising computer program code, wherein when the computer program code is run on a computer, the computer is enabled to perform the method according to any one of claims 1 to 11.

FIG. 1

Obtain first range Doppler data collected by a millimeter-wave radar on a vehicle — S201

Determine a first meteorological parameter based on the first range Doppler data, where the first meteorological parameter includes a radial velocity of a raindrop in an environment in which the vehicle is located when the millimeter-wave radar collects the first range Doppler data — S202

Obtain a first traveling parameter, where the first traveling parameter includes a vehicle speed and/or a yaw rate of the vehicle present when the millimeter-wave radar collects the first range Doppler data — S203

Determine a second meteorological parameter based on the first traveling parameter and the first meteorological parameter, where the second meteorological parameter includes a first wind direction and/or a first wind speed in the environment in which the vehicle is located — S204

FIG. 2

FIG. 3

Distance (meter)

Speed (meter/second)

(a)

Distance (meter)

Speed (meter/second)

(b)

FIG. 4

| | |
|---|---|
| Obtain first rain clutter energy information in first range Doppler data | S501 |

| | |
|---|---|
| Determine, based on the first rain clutter energy information and a mapping relationship between rain clutter energy information and a rainfall amount, a first rainfall amount in an environment in which a vehicle is located | S502 |

FIG. 5

Obtain second range Doppler data collected by a millimeter-wave radar on a vehicle — S601

Determine whether an environment in which the vehicle is located when the millimeter-wave radar collects the second range Doppler data is a rainy environment — S602

No

Control the vehicle to travel normally — S607

Yes

Obtain second rain clutter energy information in the second range Doppler data, and determine a third meteorological parameter based on the second range Doppler data, where the third meteorological parameter includes a radial velocity of a raindrop in the environment in which the vehicle is located when the millimeter-wave radar collects the second range Doppler data — S603

TO
FIG. 6B

FIG. 6A

CONT.
FROM
FIG. 6A

Obtain a second traveling parameter, where the second traveling parameter includes a vehicle speed and/or a yaw rate of the vehicle present when the millimeter-wave radar collects the second range Doppler data ⟋ S604

Determine, based on a mapping relationship between rain clutter energy information and a rainfall amount, a second rainfall amount corresponding to the second rain clutter energy information; and determine a fourth meteorological parameter based on the second traveling parameter and the third meteorological parameter, where the fourth meteorological parameter includes a second wind direction and/or a second wind speed in the environment ⟋ S605

Perform multi-frame smooth filtering on detected wind speeds, detected wind directions, and detected rainfall amounts, and use data obtained after multi-frame smooth filtering as meteorological information in the environment in which the vehicle is located ⟋ S606

FIG. 6B

Detection result of a rainfall amount
(light rain+moderate-to-heavy rain)

FIG. 7

Determine whether an environment in which a vehicle is located is a rainy environment    S801

Determine a rainfall amount condition    S802

Send prompt information to a multi-domain controller, where the prompt information indicates the rainfall amount condition in the environment in which the vehicle is located    S803

Manage or control the intelligent driving vehicle    S804

FIG. 8

Apparatus 900

Transceiver module 910

Processing module 920

FIG. 9

Apparatus 1000

Memory 1010

Processor 1020

Communication
interface 1030

Bus 1040

FIG. 10

## INTERNATIONAL SEARCH REPORT

| International application No. |
| --- |
| **PCT/CN2024/072710** |

### A. CLASSIFICATION OF SUBJECT MATTER

G01S 13/95(2006.01)i

According to International Patent Classification (IPC) or to both national classification and IPC

### B. FIELDS SEARCHED

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNTXT, CNABS, CNKI, ENTXT: 雷达, 毫米波, 气象, 雨, 速度, 车速, 偏航率, 风向, 风速, 自动驾驶, rain, radar, range, velocity, RV, wind, direction

### C. DOCUMENTS CONSIDERED TO BE RELEVANT

| Category* | Citation of document, with indication, where appropriate, of the relevant passages | Relevant to claim No. |
| --- | --- | --- |
| A | WO 2014108889 A1 (MANTISSA LTD. et al.) 17 July 2014 (2014-07-17) description, page 13, line 21-page 18, line 15, and figures 3-7 | 1-17 |
| A | CN 114839611 A (SHANGHAI ARTIFICIAL INTELLIGENCE INNOVATION CENTER) 02 August 2022 (2022-08-02) entire document | 1-17 |
| A | CN 114906190 A (FAW-VOLKSWAGEN AUTOMOTIVE CO., LTD.) 16 August 2022 (2022-08-16) entire document | 1-17 |
| A | KR 20160066854 A (KOREA INSTITUTE OF CIVIL ENGINEERING AND BUILDINGTECHNOLOGY) 13 June 2016 (2016-06-13) entire document | 1-17 |
| A | US 2015061929 A1 (KOREA INSTITUTE OF CONSTRUCTION TECHNOLOGY) 05 March 2015 (2015-03-05) entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 April 2024** | **18 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/072710**

| Patent document cited in search report | | | Publication date (day/month/year) | Patent family member(s) | | | Publication date (day/month/year) |
|---|---|---|---|---|---|---|---|
| WO | 2014108889 | A1 | 17 July 2014 | None | | | |
| CN | 114839611 | A | 02 August 2022 | None | | | |
| CN | 114906190 | A | 16 August 2022 | None | | | |
| KR | 20160066854 | A | 13 June 2016 | None | | | |
| US | 2015061929 | A1 | 05 March 2015 | US | 9476977 | B2 | 25 October 2016 |
| | | | | KR | 101408997 | B1 | 18 June 2014 |

Form PCT/ISA/210 (patent family annex) (July 2022)

# EP 4 667 971 A1

**REFERENCES CITED IN THE DESCRIPTION**

**Patent documents cited in the description**

- CN 202310165333